# EUROPÄISCHE PATENTANMELDUNG

(11) **EP 1 669 039 A1**
(43) Veröffentlichungstag der Anmeldung: **14.06.2006**
(21) Anmeldenummer: 05026126.2
(22) Anmeldetag: 30.11.2005
(51) Int. Cl.: A61C 1/10

(54) **Medizinisches längliches Handstück**

(30) Priorität: 13.12.2004 DE 102004060089
(71) Anmelder: Kaltenbach & Voigt GmbH, 88400 Biberach (DE)
(72) Erfinder: Braun, Thomas, 88299 Leutkirch (DE); Lott, Herbert, 88410 Bad Wurzach (DE)
(74) Vertreter: Schmidt-Evers, Jürgen

(57) **Zusammenfassung**

Die Erfindung betrifft ein medizinisches längliches Handstück (3) mit einem Basisteil (11) und einem dieses mindestens teilweise umgebenden Griffelement (12). Um die Konstruktion des Handstücks zu verbessern, besteht das Griffelement (12) aus mindestens zwei Griffteilen (13, 14), von denen eines lösbar mit dem anderen und/oder dem Basisteil (11) verbunden ist, und dass die Griffteile (13, 14) so gestaltet sind, dass sie formschlüssig aneinander liegen.

## Beschreibung

Die Erfindung betrifft ein medizinisches längliches Handstück, nach dem Oberbegriff des Anspruchs 1 oder 22.

Ein solches medizinisches Handstück ist dazu eingerichtet, auf eine Behandlungsstelle eines menschlichen oder tierischen Körpers einzuwirken. Im Rahmen der Erfindung kann es sich dabei auch um ein künstliches Teil des Körpers handeln, z.B. eine Prothese oder ein Modell. Handstücke dieser Art unterscheiden sich durch ihre Bauweise und ihren Einsatz für einen bestimmten medizinischen Einsatzbereich. Ein dentalmedizinisches Handstück eignet sich vorzugsweise für eine Zahnbehandlung im Mundraum eines Patienten. Ein medizinisch-technisches oder dental-technisches Handstück wird dagegen in einem medizinischen bzw. dentalen Labor zur Bearbeitung von künstlichen Teilen des menschlichen oder tierischen Körpers eingesetzt, z.B. zum Bearbeiten von Gebissen, Prothesen oder Modellen. Dagegen eignet sich ein dental-medizinisches Handstück auch für den allgemein medizinischen Bereich, weil es sich nicht nur für den Einsatz in dem kleinen Mundraum sondern auch an anderen Körperteilen eignet.

Ein Handstück der eingangs angegebenen Arten ist von länglicher oder stabförmiger Form, wobei es ein Griffelement aufweist, das den vorderen Bereich und/oder den mittleren Bereich und/oder den hinteren Bereich oder den gesamten Längsbereich des Handstücks bilden kann.

Ein solches Handstück der eingangs angegebenen Art ist z. B. in der US 2003-0014842 A1 beschrieben. Dieses vorbekannte Handstück weist ein Basisteil in Form eines Metallrohres auf, auf dem eine Griffhülse sitzt, deren Querschnittsform in ihrem vorderen und hinteren Bereich tailliert ist. Diese Taillierungen sind so groß, dass die Finger der Bedienungshand der Behandlungsperson in die Taillierungen einfassen können. Im hinteren Bereich des Basisteils ist hinter dem Griffteil ein wahlweise zu schließendes und zu öffnendes Ventil angeordnet. Mit dem rückseitigen Ende des Basisteils lässt sich das Handstück mit einer Saugleitung verbinden. Bei diesem Handstück handelt es sich somit um ein Absaughandstück.

In der DE-PS-714 275 ist ein Handgriff für zahnärztliche Instrumente, insbesondere für Bohr- und Schleifhandstücke beschrieben. Der Handgriff weist einen gleichseitigen Dreiecksquerschnitt auf, wobei er nach vorne verjüngt ist und seine Seitenflächen nach außen gewölbt sind, wobei die Stoßkanten der Seitenflächen nach beiden Enden zu abgerundet sind.

Aus der DE 41 00 452 A 1 ist ein Elektrohandwerkzeug beschrieben, das die Form einer Pistole hat, das heißt, das Elektrowerkzeug besteht aus einem vorderen und sich im wesentlichen gerade erstreckenden Werkzeugabschnitt und einem hinteren sich dazu quer erstreckenden Werkzeugabschnitt, der einen Griff für die Hand des Benutzers bildet.

Die Arbeiten oder Behandlungen, die mit einem Handstück der vorliegenden Art verrichtet werden, können sowohl kraftbetont sein, insbesondere beim spanabhebenden Bearbeiten, z.B. Bohren oder Fräsen in einem medizinischtechnischen oder dentaltecnischen Labor, oder feinmotorisch sein, insbesondere beim Polieren oder Reinigen, Spülen oder Sondieren, wie es bei einer medizinischen oder dentalmedizinischen Behandlung der Fall ist. D.h. es bedarf eines sicheren und dabei leichten Ergreifens des Handstücks mit der Hand des Benutzers, um mit einem kleinen oder größeren Kraftaufwand und möglichst geringer Aufmerksamkeit das Handstück halten, bewegen und führen zu können.

Der Erfindung liegt die Aufgabe zugrunde, bei einem medizinischen Handstück der im Oberbegriff des Anspruchs 1 angegebenen Art die Konstruktion zu verbessern. Dabei ist eine einfache und kostengünstig herstellbare Raumform des Handstücks angestrebt.

Diese Aufgabe wird durch die Merkmale des Anspruchs 1 gelöst. Vorteilhafte Weiterbildungen der Erfindung sind in den Unteransprüchen beschrieben.

Im weiteren soll ein Handstück nach dem Oberbegriff des Anspruchs 22 an unterschiedliche Einsätze oder Behandlungen oder Arbeiten anpassbar sein.

In beiden Fällen soll ein Handstück bereitgestellt werden, das ergonomisch individuell anpassbar ist und gleichzeitig einfach und kostengünstig herstellbar ist.

Der Erfindung liegt die Erkenntnis zugrunde, dass für unterschiedliche Arbeiten mit dem Handstück unterschiedliche Griffanforderungen bestehen. Für solche Arbeiten, bei denen mit dem Handstück ein Drehmoment auf die Behandlungsstelle ausgeübt wird, z.B. bei spanabhebender Bearbeitung, insbesondere beim Bohren und Fräsen, bedarf es einer besonderen Grifffestigkeit, um das Handstück gegen das Drehmoment positionieren und handhaben zu können. Für andere Feinarbeiten bedarf es dagegen einer Oberflächenbeschaffenheit des Handstücks, die ein feinfühliges Bearbeiten begünstigt.

Der Erfindung liegt deshalb im weiteren die Erkenntnis zugrunde, dass eine solche Ausgestaltung des Handstücks, die eine Anpassung an unterschiedliche Einsätze, Behandlungen oder Arbeiten ermöglicht, das Handstück verkompliziert und verteuert.

Bei der erfindungsgemäßen Ausgestaltung nach Anspruch 1 sind wenigstens zwei Griffteile vorgesehen, von denen das eine Griffteil lösbar mit dem anderen und/oder mit dem Basisteil verbunden ist, wobei die Griffteile formschlüssig aneinander liegen. Hierdurch erhält das Handstück eine Bauform mit wenigstens zwei Griffteilen, die an ihrer Teilungsfuge aneinander liegen und deshalb einen Spalt zwischen den Griffteilen vermeiden, so dass das manuelle Ergreifen des Handstücks nicht beeinträchtigt ist und sich kein Schmutz in der Teilungsfuge ansammeln kann.

Die Griffteile sind jeweils wenigstens auf einem Längsabschnitt einander quer gegenüberliegend angeordnet. Vorzugsweise sind nur zwei Griffteile vorgesehen. Es können aber auch mehrere, z.B. drei, Griffteile vorgesehen sein, die auf wenigstens einem Längsabschnitt in der Umfangsrichtung nebeneinander liegen und das geschlossene Griffelement bilden. Dabei liegen die Griffteile wenigstens im Bereich des äußeren Randes einer sich zwischen ihnen erstreckenden Teilungsfuge aneinander an. Die Griffteile können aber auch an den einander gegenüberliegenden Teilungsfugenflächen flächig aneinander liegen, wodurch die Stabilität vergrößert und die Abdichtung der Teilungsfuge verbessert wird. Die Teilungsfuge erstreckt sich auf wenigstens einem Abschnitt ihrer Länge in der Längsrichtung des Handstücks, wobei sie rückseitig vorzugsweise als längs verlaufende Teilungsfuge ausläuft. Dabei kann die Teilungsfuge sich im Bereich ihres Längsabschnitts in einer Längsebene oder Längsmittelebene des Handstücks erstrecken. Ein Abschnitt der Teilungsfuge kann sich aber auch quer zur Längsrichtung des Handstücks erstrecken, z. B. so, dass der quer verlaufende Abschnitt seitlich ausmündet. Im Bereich dieser seitlichen Ausmündung überragt das eine Griffteil das andere Griffteil in der Längsrichtung vorzugsweise nach vorne. Dieser überragende Längsabschnitt des einen Griffteils ist vorzugsweise ringförmig ausgebildet.

Es ist von Vorteil, wenigstens ein Griffteil an seiner Außenseite mit einer Erhebung auszubilden, die vorzugsweise gerundet ist und sich in der Umfangsrichtung über die gesamte Umfangsabmessung des Griffteils oder nur über einen Teil dieser Umfangsabmessung erstrecken kann, so dass sie bezüglich in der Umfangsrichtung benachbarten Außenmantelflächenabschnitten erhaben ist. In vergleichbarer Weise kann die Erhebung sich auch in der Längsrichtung des Griffteils über dessen gesamte Länge oder nur über einen Teil seiner Länge erstrecken, so dass die Erhebung bezüglich der Längsrichtung benachbarten Mantelflächenabschnitten erhaben ist. Im Rahmen der Erfindung kann die Erhebung nur an dem einen Griffteil oder an beiden Griffteilen angeordnet sein. Die wenigstens eine Erhebung erhöht die Festigkeit des Griffelementes bzw. Handstücks, weil die geneigten Flanken der Erhebung der Bedienungshand Widerstandsflächen bieten, so dass die Bedienungshand das Handstück mit einem größeren Bewegungsmoment führen kann oder gegen ein größeres Bewegungselement beim Einsatz des Handstücks stützen kann.

Wenn beide Griffteile jeweils eine Erhebung aufweisen, kann die Höhe dieser Erhebungen gleich oder unterschiedlich sein. Die wenigstens eine Erhebung ist vorzugsweise im vorderen Endbereich oder in der vorderen Hälfte des Handstücks angeordnet.

Es ist im Rahmen der Erfindung möglich, ein erfindungsgemäßes Handstück mit nur einem lösbaren Griffteil herzustellen, das nicht für einen Austausch vorgesehen ist, sondern am Handstück verbleibt. Das heißt, die erfindungsgemäße Ausgestaltung ermöglicht es, ein Handstück mit einem unlösbaren Griffteil als Basisausstattung herzustellen und zu vertreiben, das wahlweise mit nur einem lösbaren Griffteil zu einem Handstück komplettiert werden kann oder mit wenigstens zwei unterschiedlichen Griffteilen zu einem Handstück komplettiert werden kann, das an unterschiedliche Arbeiten anpassbar ist.

Erfindungsgemäß wird ein Handstück bereitgestellt, das im wesentlichen auf dem Prinzip beruht, einen Teil des Gehäuses unverändert zu belassen (Basisteil) und einen anderen Teil des Gehäuses (Griffteil) veränderbar zu gestalten, nämlich in der Form, dass das Griffteil in einen Ausschnitt im Grundkörper eingesetzt werden kann. Somit liegt ein modularer Gehäuseaufbau vor.

Ein wesentliches Merkmal der erfindungsgemäßen Ausgestaltung besteht auch darin, dass sie die Möglichkeit bietet, das Handstück durch den Anbau bzw. Austausch eines von wenigstens zwei lösbaren Griffteilen unterschiedlicher Oberflächenbeschaffenheit, die sich für unterschiedliche Arbeiten eignen, an die unterschiedlichen Arbeiten anzupassen.

Beim erfindungsgemäßen Handstück nach Anspruch 22 sind wenigstens zwei Griffelemente unterschiedlicher Oberflächenbeschaffenheit vorgesehen, von denen wahlweise das eine Griffelement oder das andere Griffelement an dem Basisteil befestigbar ist. Hierdurch lässt sich das Handstück durch den wahlweisen Anbau des einen oder des anderen Griffelements an unterschiedliche Behandlungen oder Bearbeitungen anpassen.

Wie schon bei zwei Griffteilen unterschiedlicher Oberflächenbeschaffenheit sind auch die Griffelemente unterschiedlicher Oberflächenbeschaffenheit so ausgebildet, dass mit der Bedienungshand formschlüssig oder kraftschlüssig unterschiedlich große Haltmomente, insbesondere Drehmomente, mit dem Handstück ausgeübt werden können oder das Handstück manuell gegen unterschiedlich große Haltemomente, insbesondere Drehmomente, gehalten bzw. gestützt werden kann.

Dabei zeichnen sich die erfindungsgemäßen Ausgestaltungen sowohl im Falle von unterschiedlichen Griffteilen als auch im Falle von unterschiedlichen Griffelementen durch einfache und kostengünstig herstellbare Ausgestaltungen aus, die die wahlweise Anpassung des Handstücks in einfacher Weise ermöglichen.

Auch die unterschiedliche Oberflächenbeschaffenheit der Griffelemente lässt sich durch manuell ergreifbare Oberflächenbereiche unterschiedlicher Oberflächenreibung kraftschlüssig und/oder durch unterschiedlich geformte Erhebungen an den Griffelementen formschlüssig erreichen.

Nachfolgend werden vorteilhafte Ausgestaltungen der Erfindung anhand bevorzugter Ausführungsbeispiele näher erläutert. Es zeigt:
- Fig. 1: ein erfindungsgemäßes medizinisches oder dentalmedizinisches oder medizinisch-technisches oder dental-technisches Handstück in perspektivischer Seitenansicht;
- Fig. 2: das Handstück in der Seitenansicht;
- Fig. 3: das Handstück in der Draufsicht;
- Fig. 4: das Handstück in der Rückansicht gemäß dem Pfeil IV in Fig. 3.;

- **Fig. 5**: das Handstück in seiner Position gemäß Fig. 3 im axialen Längsschnitt;
- Fig. 6: ein Griffteil des Handstücks im axialen Längsschnitt;
- Fig. 7: den Querschnitt VII-VII in der Fig. 5;
- Fig. 8: ein erfindungsgemäßes Handstück in abgewandelter Ausgestaltung;
- Fig. 9: das Handstück nach Fig. 8 in der Rückansicht gemäß dem Pfeil IX in Fig. 8;
- Fig. 10: ein erfindungsgemäßes Handstück in weiter abgewandelter Ausgestaltung;
- Fig. 11: das Handstück nach Fig. 10 in der Rückansicht gemäß dem Pfeil XI-XI in Fig. 10;
- Fig. 12: ein erfindungsgemäßes Handstück in weiter abgewandelter Ausgestaltung in der Seitenansicht;
- Fig. 13: das Handstück nach Fig. 12 in einem demontierten Zustand;
- Fig. 14: ein Griffelement für das Handstück nach Fig. 13 im axialen Schnitt;
- Fig. 15: den Querschnitt **XV-XV** in Fig. 12.

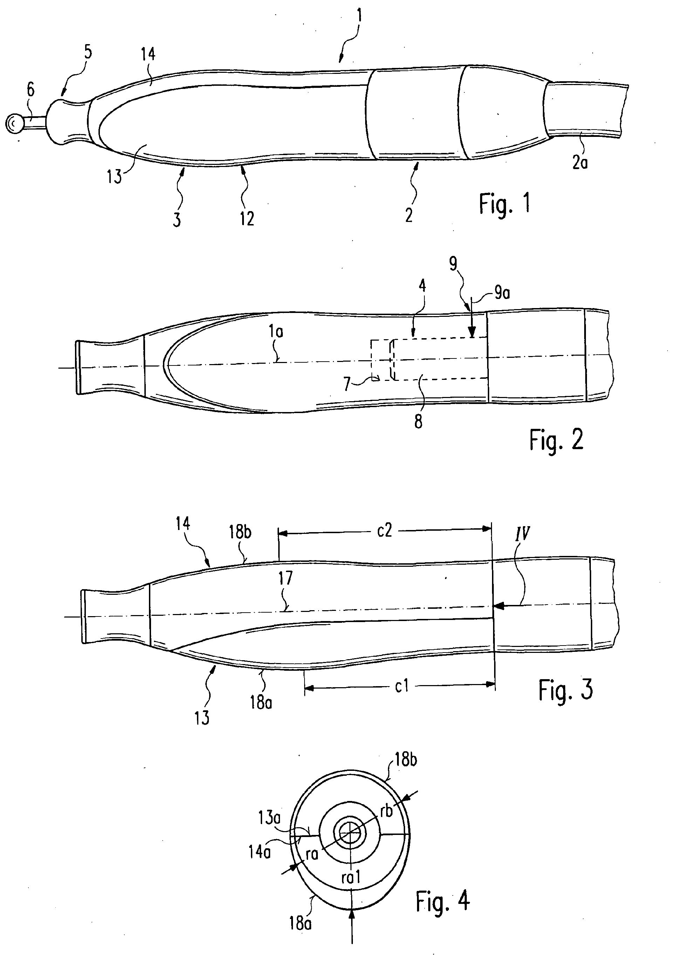

Das in Fig. 1 in seiner Gesamtheit mit 1 bezeichnete Handstück kann einteilig oder mit einem hinteren Handstückteil, nämlich einem sogenannten Anschlussteil 2, und einem vorderen Handstückteil 3 zweiteilig ausgebildet sein. Bei einer zweiteiligen Ausbildung, wie es z.B. bei einem dental-medizinischen Handstück 1 üblich ist, sind das hintere Handstückteil und das vordere Handstückteil 3 durch eine nur in Fig. 2 gestrichelt angedeutete Kupplung 4 , insbesondere eine Steckkupplung, vorzugsweise eine Steck/Dreh-Kupplung, lösbar miteinander verbunden.

Beim vorliegenden Ausführungsbeispiel ist am vorderen Ende des Handstücks 1 eine Haltevorrichtung 5 mit einer nach vorne (dargestellt) oder seitlichen offenen (nicht dargestellt) Einstecköffnung 5a für ein Werkzeug 6 angeordnet, wobei das Werkzeug 6 seitlich oder nach vorne abstehen kann. Das vordere Handstückteil 3 kann sich gerade (dargestellt) oder zu einer seitlichen Haltevorrichtung 5 abgewandten Seite hin gekrümmt (nicht dargestellt) oder winkelförmig erstrecken (nicht dargestellt), was bekannt ist.

Die Steck/Dreh-Kupplung wird durch eine hohlzylindrische Kupplungsausnehmung 7 und einem darin mit geringem Bewegungsspiel einsteckbaren im wesentlichen zylindrischen Kupplungszapfen 8 gebildet. Beim vorliegenden Ausführungsbeispiel ist die Kupplungsausnehmung 7 am hinteren Ende des Handstücks 1 angeordnet, und der im wesentlichen zylindrische Kupplungszapfen 8 erstreckt sich vom Anschlussteil 2 nach vorne. Im gekuppelten Zustand sind die Kupplungsausnehmung 7 und der Kupplungszapfen 8 durch eine Verrastungsvorrichtung 9 lösbar miteinander verrastet. Diese weist ein Verrastungselement 9a auf, das in dem einen Kupplungsteil radial beweglich gelagert und durch eine Federkraft in eine die Teilungsfuge durchsetzende Verrastungsstellung vorgespannt ist, in der das Verrastungselement 9a in eine Ringnut im anderen Kupplungsteil, insbesondere im Kupplungszapfen 8, einfasst. Eine solche Verrastungsvorrichtung 9 verrastet beim Kuppeln selbsttätig, und sie ist beim Entkuppeln durch eine manuelle axiale Zugkraftausübung überdrückbar, wobei das Verrastungselement 9a selbsttätig in seine Freigabestellung verdrängt wird. Beim Kuppeln durch Zusammenstecken rastet das Kupplungselement 9a selbsttätig in die vorzugsweise durch eine Ringnut gebildete Rastausnehmung ein.

Das Handstück 1 bzw. das Anschlussteil 2 ist mit einer flexiblen Versorgungsleitung 2a verbunden, die mit einem nicht dargestellten Steuergerät verbunden ist.

Das Handstückteil 3 ist vorzugsweise auf dem Kupplungszapfen 8 frei drehbar gelagert, wodurch die Handhabbarkeit verbessert wird. Durch die Steck/Dreh-Kupplung erstreckt sich wenigstens eine Medienleitung 10 für ein Behandlungs- oder Antriebsmedium, z. B. Wasser, Druckluft oder ein Wasser/Luft-Gemisch (Spray) oder Licht. Die Medienleitung 10 kann sich axial durch eine radiale Teilungsfuge (nicht dargestellt) oder Z-förmig durch eine hohlzylindrische Teilungsfuge zwischen der Kupplungsausnehmung 7 und dem Kupplungszapfen 8 erstrecken, wobei die Medienleitung 10 die Teilungsfuge im Bereich einer Ringnut im Kupplungszapfen 8 oder in der Kupplungsausnehmung 7 durchsetzt, so dass in jeder Drehstellung der Mediendurchgang gewährleistet ist. Beiderseits vom Durchgang ist die Teilungsfuge durch einen Dichtring 8a abgedichtet, der in einer Ringnut in der Wandung der Kupplungsausnehmung 7 oder in der Mantelfläche des Kupplungszapfens 8 angeordnet sein kann. Hierdurch ist eine freie Drehbarkeit um 360 ° und mehr gewährleistet. Die Medienleitung 10 erstreckt sich vom hinteren Ende des Handstücks 1 zu dessen vorderem Endbereich, wobei sie teilweise als Kanal im Instrumentenkörper oder als Schlauch- bzw. Rohrleitung verlaufen kann. Die Medienleitung 10 mündet im vorderen Endbereich des Handstücks 1 aus diesem aus, wobei diese Mündungsöffnung 10a auf die Behandlungsstelle bzw. auf die Spitze des Werkzeugs 6 gerichtet ist.

Die Hauptteile des Handstücks 1 sind ein Basisteil 11 und ein Griffelement 12, das das Basisteil mindestens teilweise und vorzugsweise ringförmig oder hülsenförmig umgibt, wobei das Griffelement 12 aus mindestens zwei Griffteilen 13, 14 besteht, von denen ein Griffteil, z.B. das Griffteil 14, lösbar mit dem anderen Griffteil, hier mit dem Griffteil 13, und/oder mit dem Basisteil 11 verbunden ist. Beim Ausführungsbeispiel ist das zuerst genannte Griffteil 13 unlösbar mit dem Basisteil 11 verbunden, z.B. damit einteilig ausgebildet oder damit verklebt. Zur Befestigung des lösbaren zweiten Griffteils 14 dient eine Befestigungsvorrichtung 15, die vorzugsweise durch eine Schnellverbindung, z.B. eine Verrastungsvorrichtung, gebildet ist und beim Ausführungsbeispiel mit dem Griffteil 13 zusammenwirkt.

Das Basisteil 11 ist vom Griffelement 12 bzw. von den Griffteilen 13, 14 ringförmig oder hülsenförmig umgeben, wobei diese Überdeckung sich in der Längsrichtung über die gesamte Länge des Basisteils 11 oder nur über ein Teil der Länge erstrecken kann. Die Überdeckung erstreckt sich vorzugsweise bis zum hinteren Ende des Basisteils 11. Ein vorderer Endbereich des Basisteils 11 kann aus der Überdeckung des Griffelements 12 vorragen oder ebenfalls davon überdeckt sein. Beim Ausführungsbeispiel ist das Basisteil 11 durch einen hohlzylindrischen Basiskörper gebildet, der in seinem vorderen Bereich verjüngt sein kann, wobei im Hohlraum des vorderen Endbereichs die im einzelnen nicht dargestellte Haltevorrichtung 5 angeordnet sein kann.

Bei den Griffteilen 13, 14 kann es sich um seitliche, z.B. segmentförmige teilring-oder halbringförmige oder schalen- oder halbschalenförmige Teile handeln, die an einer sich im wesentlichen in der Längsrichtung des Basisteils 11 bzw. Handstücks 3 erstreckenden Teilungsfuge 16 aneinander liegen, so dass die Teilungsfuge 16 nach außen verschlossen ist. Dabei brauchen die Teile nur im äußeren Randbereich 16a der Teilungsfuge 16 aneinander zuliegen, um die Teilungsfuge 16 zu schließen. Vorzugsweise liegen die Griffteile 13, 14 mit sich über den gesamten Bereich der Teilungsfuge 16 erstreckenden Anlageflächen 13a, 14a aneinander an.

Bei halbschalenförmigen Griffteilen 13, 14 erstreckt sich die Teilungsfuge 16 im mittleren Bereich des Basisteils 11, wobei die Teilungsfuge 16 in einer die Längsachse 1a des Handstücks 3 längs schneidenden Längsebene 17 oder dazu geringfügig parallel verlaufen kann, wie es Fig. 3 zeigt. Die Längsebene 17 befindet sich im wesentlichen zwischen den Griffteilen 13, 14. (Fig. 3)

Es ist vorteilhaft, wenn die Teilungsfuge 16 nach hinten in der Längsrichtung des Basisteils 11 bzw. Handstücks 3 ausläuft. Die Teilungsfuge 16 kann jedoch auch einen sich quer zur Längsrichtung erstreckenden Teilungsfugenabschnitt 16b aufweisen, der dazu führt, dass das eine Griffteil 14 das andere Griffteil 13 axial überragt. Der sich quer erstreckende Teilungsfugenabschnitt 16b kann sich gerade oder nach vorne und nach außen bogenförmig gekrümmt erstrecken, wie es Fig. 3, 5 und 6 zeigen, wobei der Teilungsfugenabschnitt 16b im Abstand a vom vorderen Ende des längeren Griffteils 14 an der Mantelfläche austritt. Die Mantelflächen 18a, 18b der Griffteile 13, 14 gehen am Mantelflächenauslauf des Teilungsfugenaußenrandes 16a stufenlos ineinander über. Dabei kann dieser jeweils ineinander übergehende Flächenbereich eine wahlweise Schrägstellung bezüglich der Längsmittelachse la aufweisen.

Im Rahmen der Erfindung können die Griffteile 13, 14 ein Griffelement 12 mit einer Mantelfläche bilden, die bezüglich der Längsmittelachse 11a des Handstücks 1 bzw. des Basisteils 11 symmetrisch geformt ist. Ein solches Handstück 1 hat in jeder Drehstellung gleiche Oberflächenbeschaffenheiten bzw. Griffbedingungen, soweit seine Form betroffen ist.

Für unterschiedliche Arbeiten oder für unterschiedliche Qualitäten der zu leistenden Arbeit ist es vorteilhaft, Griffteile 13, 14 zu haben, deren Oberflächenbeschaffenheit unterschiedlich ist, was die Grifffestigkeit und die Handhabung des Handstücks 1 verbessert. Ein oder beide Griffteile 13, 14 können eine von einer runden bzw. zylindrischen Querschnittsform abweichende Mantelflächenform, insbesondere Erhebungen 18a, 18b aufweisen, die sich jeweils in der Umfangsrichtung über die gesamte Umfangsabmessung U1, U2 oder nur über einen Teil der Umfangsabmessung U1, U2 erstrecken können, so dass auf einer oder beiden Seiten der betreffenden Erhebung 18a Umfangsflächenabschnitte vorhanden sind, die bezüglich der Erhebung 18a vertieft sind. Quer zur Längsrichtung des Handstücks 1 gesehen, kann die oder können die Erhebungen 18a, 18b sich über die gesamte Länge L des Griffelementes 12 bzw. Handstücks 3 oder nur über einen Teil der Länge L erstrecken, so dass hinter und/oder vor der Erhebung 18a , 18b vertiefte Umfangsflächenabschnitte des Griffelementes 12 vorhanden sind.

Beim Ausführungsbeispiel nach Fig. 1 bis 4, bei dem wenigstens die hinteren Längsabschnitte der Griffteile 13, 14 einander gegenüberliegend angeordnet sind, weist das unlösbar mit dem Basisteil 11 verbundene Griffteil 13 eine Erhebung 18a auf, die sich nur über einen Teil der Umfangsabmessung U1 erstreckt, so dass auf beiden Seiten der am besten in Fig. 4 sichtbaren Erhebung 18a vertiefte Umfangsflächenabschnitte mit der im wesentlichen radialen Querschnittsabmessung ra vorhanden sind. Die bezüglich der Mittelachse 11a größere Querschnittsabmessung ist mit ra1 bezeichnet.

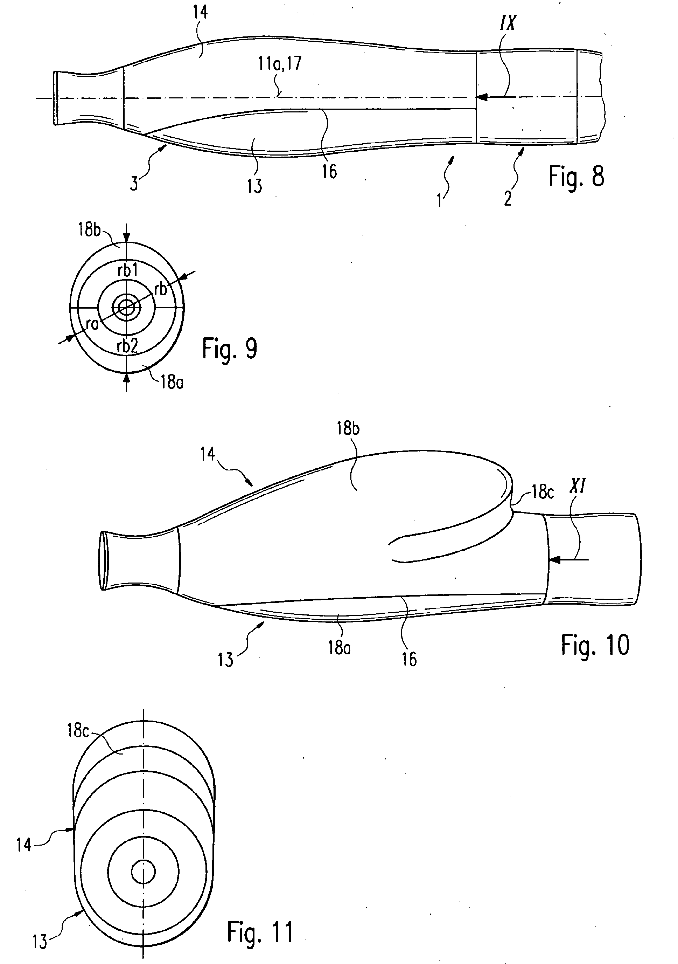

Dagegen weist das lösbare Griffteil 14 eine Erhebung 18b auf, die sich über die gesamte Umfangsabmessung U2 mit der im wesentlichen gleichen Querschnittsabmessung rb erstreckt. Die Erhebung 18b kann deshalb mit einem sich in die Umfangsrichtung erstreckenden Wulst bezeichnet werden. Wie Fig. 3 und 8 zeigen, können die Firste der Erhebungen 18a, 18b einen ungleichen oder gleichen Abstand c1, c2 vom hinteren Ende des Griffelements 12 bzw. Handstücks 1 aufweisen, wobei die Erhebung 18b des lösbaren Griffteils 14 nach vorne versetzt sein kann.

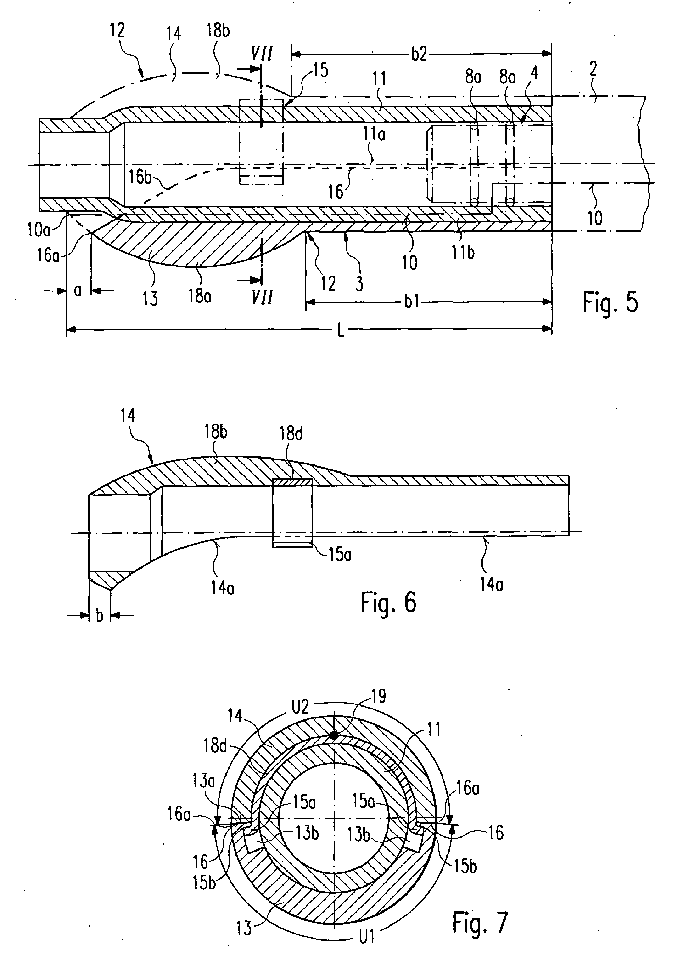

Die Erhebungen 18a, 18b können einen Abstand b1, b2 vom hinteren Ende des Handstücks 1 bzw. Griffelements 12 aufweisen, der gleich oder unterschiedlich ist. Im Bereich dieses Abstands kann die Querschnittsform des Griffelementes zylindrisch sein bzw. können die Querschnittsformen der Griffteile 13, 14 im wesentlichen halbschalenförmig sein. Die wenigstens eine Erhebung 18a, 18b kann sich bis zum vorderen Ende des Griffelementes 12 erstrecken, wie es Fig. 5 zeigt.

Das Ausführungsbeispiel nach Fig. 8 und 9 unterscheidet sich vom vorbeschriebenen Ausführungsbeispiel dadurch, dass auch die am lösbaren Griffteil 14 angeordnete Erhebung 18b auf beiden Seiten vertiefte Umfangsflächenabschnitte aufweisen kann. Die Querabmessungen ra1, rb1 dieser Erhebungen 18a, 18b können gleich oder unterschiedlich sein, wodurch sich ellipsenförmige Querschnitte ergeben.

Beim Ausführungsbeispiel nach Fig. 10 und 11 weist z. B. das lösbare Griffteil 14 eine Erhebung 18b auf, die an ihrer Rückseite eine Stufenfläche 18c aufweist, die der rückenseitigen Abstützung an einem Finger der Bedienungshand, z. B. dem Mittelfinger, dienen kann. Diese Erhebung 18b kann sich z. B. bis in den hinteren Endbereich des Griffelementes 12 erstrecken. Die Stufenfläche 18c kann sich gerundet bis in die hinteren Seitenbereiche der Erhebung 18b erstrecken.

Bei den vorbeschriebenen Ausführungsbeispielen ist das Basisteil 11 z. B. durch ein hohlzylindrisches Rohr gebildet, das im vorderen Endbereich verjüngt sein kann. Die Griffteile 13, 14 sind somit an der Mantelfläche des hohlzylindrischen Basisteils 11 angeordnet und abgestützt. Der freie Querschnitt des rohrförmigen Basisteils 11 kann die Kupplungsausnehmung 7 bilden. Die Medienleitung 10 kann sich im rohrförmigen Basisteil 11 oder im vorzugsweise unlösbaren Griffteil 13 nach vorne ausmündend erstrecken.

Die vorzugsweise als Verrastungsvorrichtung ausgebildete Befestigungsvorrichtung 15 weist zwei einander quer gegenüberliegend angeordnete Rastnasen 15a auf, die jeweils eine Verrastungskante 15b am Griffteil 13 hintergreifen. Die Verrastungskante 15b kann jeweils durch eine Nut 13b gebildet sein, die sich in der Innenmantelfläche des Griffteils 13 befindet und sich z. B. bis zum hinteren Ende des Griffteils 13 erstrecken kann. Die Rastnasen 15a können an den Enden eines kreisbogenabschnittförmigen, z. B. halbkreisförmigen Streifenbogens 18d angeordnet und z. B. nach außen gebogen sein, der sich in einer bogenförmigen Ausnehmung 13b des Griffteils 14 befindet und z. B. in seinem Scheitelbereich 19 mit dem Griffteil 14 verbunden sein kann, z. B. durch Kleben. Der Streifenbogen 18d kann z. B. aus federelastischem Material, z. B. Federstahl bestehen, wodurch die Rastnasen 15a elastisch nachgiebig sind und durch die Federkraft hinter die Rastkanten 15b einfedern und verrasten können. Wenn die Nuten 13b sich bis zum vorderen Ende des Griffteils 13 erstrecken, ist es auch möglich, das Griffteil 14 dadurch zu verbinden, dass es von vorne nach hinten auf das Basisteil 11 aufgeschoben wird, wobei die Rastnasen 15a die Rastkanten 15b hintergreifen.

Die Teile des Handstücks 1, insbesondere das Basisteil 11 und die Griffteile 13, 14 bestehen aus korrosionsfestem Material, z.B. aus legiertem Stahl oder Kunststoff.

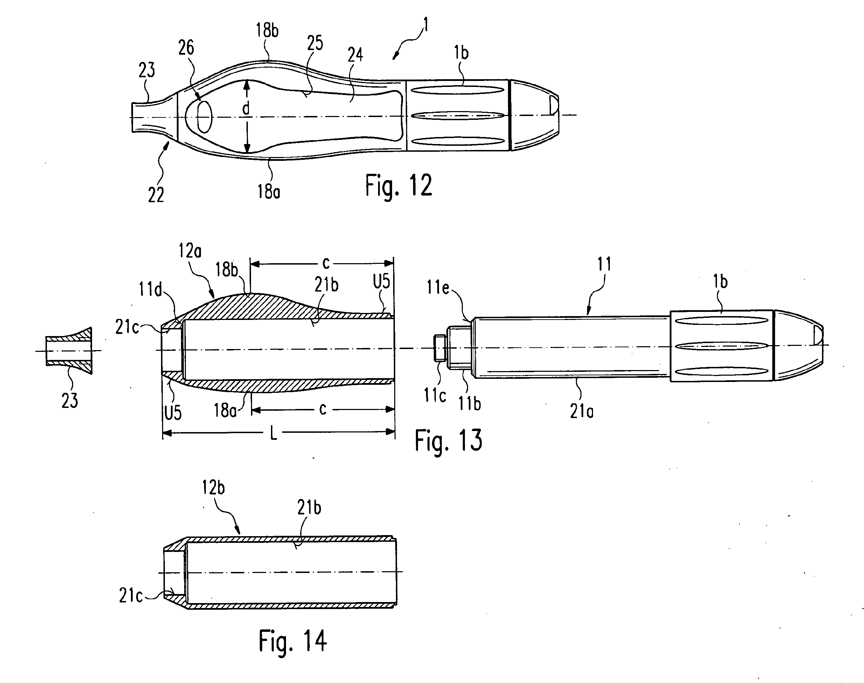

Beim Ausführungsbeispiel nach Fig. 12 bis 15, bei dem gleiche oder vergleichbare Teile mit gleichen Bezugszeichen versehen sind, unterscheidet sich von den vorbeschriebenen Ausführungsbeispielen dadurch, dass nicht zwei Griffteile 13, 14, sondern zwei Griffelemente 12a, 12b vorgesehen sind, von denen das eine Griffelement 12a oder das andere Griffelement 12b wahlweise an dem Basisteil 11 befestigbar ist. Das Basisteil 11 ist ebenfalls durch eine Hülse, vorzugsweise hohlzylindrischen Querschnitts, gebildet, die von einem hinteren Handstückabschnitt 1b nach vorne abstehen und im vorderen Endbereich einen oder zwei hintereinander angeordnete und stufenförmig verjüngte Längsabschnitte 11b, 11c aufweisen kann. Das Basisteil 11 bildet auch hier einen Steckzapfen 21a, auf den die Griffelemente 12a, 12b aufsteckbar bzw. die Steckverbindungsteile zusammensteckbar sind. Hierzu weisen die hülsenförmigen Griffelemente 12a, 12b jeweils eine Steckausnehmung 21b auf, die im vorderen Endbereich der Griffelemente 12a, 12b zu einer kleineren Steckausnehmung 21c verjüngt ist, wodurch eine innere Schulterfläche 11d dazwischen gebildet ist, die im auf das Basisteil 11 aufgeschobenen Zustand des betreffenden Griffelements 12a, 12b an der axial gegenüberliegenden Stufenfläche 11e des Basisteils 11 anliegt. Zur Verhinderung einer Rückbewegung des Griffelements 12a, 12b ist eine Rückbewegungssicherung 22 vorgesehen, die beim vorliegenden Ausführungsbeispiel durch ein Schraubelement gebildet ist, mit der das Griffelement 12a, 12b am Basisteil 11 lösbar festschraubbar ist. Hierzu kann eine Fronthülse 23 dienen, die auf den vorderen Längsabschnitt 11c befestiggbar ist, vorzugsweise durch Schrauben auf den ein Außengewinde aufweisenden Längsabschnitt 11c.

Zur Verhinderung einer Drehung der Griffelemente 12a, 12b ist eine Drehsicherung 20 zwischen dem Basisteil 11 und dem jeweiligen Griffelement 12a,12b wirksam angeordnet, die durch einen Sicherungszapfen 20a an dem einen Verbindungsteil und eine den Zapfen 20a aufnehmende Sicherungsausnehmung 20b an dem anderen Verbindungsteil gebildet ist. Beim Ausführungsbeispiel ist der Sicherungszapfen 20a auf dem Steckzapfen 21a und die Sicherungsausnehmung 20b im Griffelement 12a, 12b angeordnet. Wenn die Drehsicherung 20 in einem nach vorne gerichteten Abstand vom Steckzapfenfuß, z. B. in dessen vorderen Bereich, angeordnet ist, kann die Sicherungsausnehmung 20b durch eine Längsnut in der Umfangswand des Griffelements 12a, 12b gebildet sein.

Die Griffelemente 12a, 12b unterscheiden sich voneinander durch ihre Oberflächen- bzw. Mantelflächenbeschaffenheit. Hierdurch soll die Grifffestigkeit der Griffelemente 12a, 12b und damit die Handhabbarkeit des Handstücks 1 formschlüssig oder kraftschlüssig verbessert werden. Außerdem lässt sich das Handstück 1 durch die Auswahl oder den Austausch von wenigstens zwei Griffelementen 12a, 12b an unterschiedliche Arbeiten oder Behandlungen anpassen, z.B. durch die Montage des Griffelements 12a größeren Angriffsmomentes, mit dem die behandelnde Person ein größeres Drehmoment und/oder Schub- bzw. Zugmoment auf das Griffelement 12a ausüben kann als beim anderen Griffelement 12b.

Dies kann z.B. dadurch erreicht werden, dass eines der beiden Griffelemente 12a, 12b eine unrunde Querschnittsform aufweist und das andere Griffelement 12b eine runde, z.B. zylindrische, Querschnittsform aufweist.

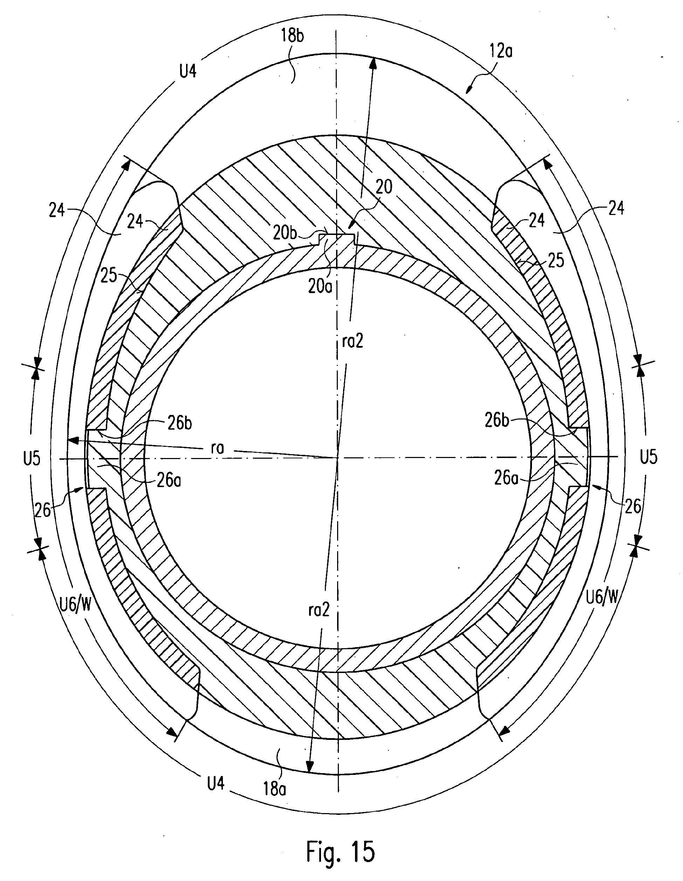

Ein oder beide Griffelemente 12a, 12b können aber auch eine Erhebung oder mehrere auf dem Umfang verteilt angeordnete Erhebungen aufweisen, z.B. zwei Erhebungen 18a, 18b, die in der Umfangsrichtung versetzt, z. B. einander gegenüberliegend angeordnet sind, wie es insbesondere Fig. 15 zeigt.

Eine Erhebung 18a, 18b kann sich über den gesamten Umfang oder nur über ein Teil des Umfangs des betreffenden Griffelements erstrecken oder über die gesamte Länge L oder nur über ein Teil der Länge L des betreffenden Griffelements erstrecken. Das mit 12a bezeichnete Griffelement weist zwei einander gegenüberliegende Erhebungen 18a, 18b auf, die sich nur über einen Teil der Umfangsabmessung U3 erstrecken, so dass auf beiden Seiten der am besten in Fig. 15 sichtbaren Erhebungen 18a, 18b vertiefte Umfangsflächenabschnitte mit der im wesentlichen radialen Querschnittabmessung ra vorhanden sind. Die bezüglich der Mittelachse 11a größeren Querschnittsabmessungen der vorzugsweise unterschiedlich hohen Erhebungen 18a, 18b sind mit ra1, ra2 bezeichnet.

Wie Fig. 13 zeigt, können die Firste der Erhebungen 18a, 18b einen ungleichen oder gleichen Abstand c vom hinteren Ende des Griffelementes 12 aufweisen. Im Bereich dieses Abstands kann die Querschnittsform des Griffelements zylindrisch sein. Die wenigstens eine Erhebung 18a, 18b kann sich bis zum vorderen Ende des Griffelements 12 abfallend erstrecken, wie es Fig. 13 zeigt.

Auch bei diesen Ausführungsbeispielen ist es für unterschiedliche Arbeiten oder für unterschiedliche Qualitäten der zu leistenden Arbeit oder Behandlung vorteilhaft, Griffelemente 12a, 12b zu haben, deren Oberflächenbeschaffenheit unterschiedlich ist, was die Grifffestigkeit und die Handhabung des Handstücks 1 verbessert. Ein oder beide Griffelemente 12a, 12b können eine von einer runden bzw. zylindrischen Querschnittsform abweichende Mantelflächenform, insbesondere Erhebungen 18a, 18b, aufweisen, die sich jeweils in der Umfangsrichtung über die gesamte Umfangsabmessung oder nur über einen Teil der Umfangsabmessung erstrecken können, so dass auf einer oder beiden Seiten der betreffenden Erhebung 18a Umfangsflächenabschnitte U4 vorhanden sind, die bezüglich der Erhebung 18a vertieft sind. Quer zur Längsrichtung des Handstücks 1 gesehen, kann die oder können die Erhebungen 18a,18b sich über die gesamte Länge L des Griffelelements 12a bzw. 12b oder nur über einen Teil der Länge L erstrecken, so dass hinter und/oder vor der Erhebung 18a, 18b vertiefte Umfangsflächenabschnitte U5 des Griffelements 12a, 12b vorhanden sind.

Die Teile des Handstücks 1, insbesondere das Basisteil 11 und die Griffelemente 12a, 12b, bestehen aus korrosionsfestem Material, z.B. aus legiertem Stahl oder Kunststoff.

Es ist zur Verbesserung der Handhabung und Grifffestigkeit außerdem vorteilhaft, wenigstens einen Umfangabschnitt U6 des wenigstens einen Griffelementes 12a, 12b mit einem Material oder einer Materialstruktur unterschiedlicher Oberflächenreibung beim Ergreifen mit der Bedienungshand auszubilden. Beim Ausführungsbeispiel nach Fig. 13 und 15 sind zwei solcher Umfangsabschnitte U6 unterschiedlicher Griffreibung vorhanden, die vorzugsweise einander gegenüberliegend angeordnet sind, insbesondere auf beiden Seiten von einer oder von zwei Erhöhungen 18a, 18b, und etwa einen Umfangswinkel W von etwa 45° bis 90° oder bis 120° und mehr einschließen können. Der jeweilige Bereich U6 unterschiedlicher Reibung kann dadurch gebildet sein, dass das betreffende Griffelement 12a oder 12b in diesem Bereich ein Material aufweist, das beim Ergreifen mit der Bedienungshand eine größere Reibung erzeugt, als im übrigen Umfangsbereich des Griffelements 12a. Ein solcher Bereich wird vorzugsweise dadurch gebildet, dass ein insbesondere flacher Materialstreifen 24 mit einer solchen Außenflächenreibung als zusätzliches Teil in eine passende Steckausnehmung 25 in der Umfangsfläche des Griffelements 12a, 12b eingesetzt und fixiert ist. Die Oberflächen der Materialstreifen 24 und der angrenzenden Umfangsflächenabschnitte des Griffelements 12a, 12b schließen stufenlos miteinander ab, wobei im Bereich der Steigung einer Erhöhung 12a, 12b die aneinander angrenzenden Umfangsflächenabschnitte je nach Umfangsrichtung bzw. Längsrichtung steigend oder fallend verlaufen.

Die Ausnehmung 25 und der Materialstreifen 24 erstrecken sich vorzugsweise im Längsbereich der wenigstens einen Erhöhung 18a, 18b. Sie kann sich auch über etwa die Länge L erstrecken und in ihrer Breite d etwa der Querschnittsvergrößerung und -verringerung der Erhebungen 18a, 18b folgen.

Der wenigstens eine Materialstreifen 24 kann jeweils unlösbar oder lösbar in der Steckausnehmung 25 befestigt sein. Für eine unlösbare Verbindung kann der Materialstreifen 24 z.B. festgeklebt sein. Für eine lösbare Verbindung eignet sich z.B. eine Steckverbindung mit Klemmwirkung.

Eine solche in Fig. 12 und 15 andeutungsweise dargestellt und mit 26 bezeichnete Steckverbindung kann jeweils durch wenigstens einen Steckzapfen 26a an dem einen Verbindungsteil und einem an dem anderen Verbindungsteil angeordneten und den Steckzapfen 26a vorzugsweise aufnehmendes Steckloch 26b gebildet sein. Der Materialstreifen 24 kann durch eine oder mehrere solcher an seiner Innenseite verteilt angeordneten Steckverbindungen 26 klemmend und somit leicht montierbar oder demontierbar bzw. austauschbar befestigt sein. Beim Ausführungsbeispiel nach Fig. 15 ist der Steckzapfen 26a jeweils an der Umfangswand des Griffelements 12a vorzugsweise einteilig angeformt, wobei sich das Steckloch 26b in dem Materialstreifen 24 befindet. Dabei kann das Steckloch 26b ein Sackloch oder ein Durchgangsloch sein, so dass im letzteren Falle der Steckzapfen 26a sichtbar ist.

Beim Ausführungsbeispiel besteht der Materialstreifen 24 jeweils aus einem Material, das im Sinne einer Weichkomponente weicher ist als das Material der Umfangswand des Griffelements 12a. Die Umfangswand und der Materialstreifen 24 bestehen vorzugsweise aus Kunststoff.

## Patentansprüche

1. Medizinisches längliches Handstück (3) mit einem Basisteil (11) und einem dieses mindestens teilweise umgebenden Griffelement (12),
**dadurch gekennzeichnet,**
**dass** das Griffelement (12) aus mindestens zwei Griffteilen (13, 14) besteht, von denen eines lösbar mit dem anderen und/oder dem Basisteil (11) verbunden ist, und
**dass** die Griffteile (13, 14) so gestaltet sind, dass sie formschlüssig aneinander liegen.

2. Handstück nach Anspruch 1,
**dadurch gekennzeichnet,**
**dass** die Griffteile (13, 14) an ihren einander zugewandten Fugenflächen (13a, 14a) einer Teilungsfuge (16) flächig aneinander liegen.

3. Handstück nach Anspruch 2,
**dadurch gekennzeichnet,**
**dass** die Teilungsfuge (16) sich wenigstens auf einem Teilungsfugenabschnitt in der Längsrichtung des Handstücks (3) erstreckt.

4. Handstück nach Anspruch 2 oder 3,
**dadurch gekennzeichnet,**
**dass** die Teilungsfuge (16) einen sich quer zur Längsrichtung des Handstücks erstreckenden Teilungsfugenabschnitt (16b) aufweist, der sich vorzugsweise gerundet oder schräg nach vorne erstreckt.

5. Handstück nach Anspruch 4,
**dadurch gekennzeichnet,**
**dass** der sich quer erstreckende Teilungsfugenabschnitt (16b) seitlich ausmündet.

6. Handstück nach einem der vorherigen Ansprüche 3 bis 5,
**dadurch gekennzeichnet,**
**dass** der sich in der Längsrichtung des Handstücks erstreckende Teilungsfugenabschnitt rückseitig ausmündet.

7. Handstück nach einem der vorherigen Ansprüche,
**dadurch gekennzeichnet,**
**dass** die Griffteile (13, 14) jeweils mit wenigstens einem Längsabschnitt einander quer gegenüberliegend angeordnet sind.

8. Handstück nach Anspruch 7,
**dadurch gekennzeichnet,**
**dass** wenigstens die Längsabschnitte einen in der Umfangsrichtung geschlossenes Griffelement (12) bilden.

9. Handstück nach einem der Ansprüche 4 bis 8,
**dadurch gekennzeichnet,**
**dass** der sich in der Längsrichtung erstreckende Teilungsfugenabschnitt (16b) in einer Längsebene oder Längsmittelebene (17) erstreckt.

10. Handstück nach einem der vorherigen Ansprüche,
**dadurch gekennzeichnet,**
**dass** die Griffteile (13, 14) von unterschiedlicher Oberflächenbeschaffenheit sind, z.B. von unterschiedlicher Grifffestigkeit oder von unterschiedlicher Oberflächenform, insbesondere bezüglich einer sich zwischen den Griffteilen (13, 14) erstreckenden Längsmittelebene (17).

11. Handstück nach einem der vorherigen Ansprüche,
**dadurch gekennzeichnet,**
**dass** ein oder beide Griffteile (13, 14) an ihren Außenseiten jeweils eine Erhebung (18a, 18b) aufweisen, die vorzugsweise konvex gerundet ist.

12. Handstück nach Anspruch 11,
**dadurch gekennzeichnet,**
**dass** die Erhebungen (18a, 18b) beider Griffteile (13, 14) gleiche oder unterschiedliche Querabmessungen (ral, ra2) aufweisen.

13. Handstück nach Anspruch 11 oder 12,
**dadurch gekennzeichnet,**
**dass** die Erhebung (18a, 18b) sich über die gesamte Umfangsabmessung (U1, U2) oder nur über einen Teil der Umfangsabmessung (U1, U2) des Griffteils (13, 14) erstreckt.

14. Handstück nach einem der Ansprüche 11 bis 13,
**dadurch gekennzeichnet,**
**dass** die Erhebung (18a, 18b) sich über die gesamte Länge (L) des Handstücks (3) oder nur über einen Teil der Länge (L) des Handstücks (3) erstreckt.

15. Handstück nach einem der Ansprüche 11 bis 14,
**dadurch gekennzeichnet,**
**dass** die Erhebung (18a, 18b) sich jeweils im vorderen Endbereich oder im Bereich der vorderen Hälfte des Handstücks (3) befindet.

16. Handstück nach einem der Ansprüche 11 bis 15,
**dadurch gekennzeichnet,**
**dass** der sich hinter der Erhebung (18a, 18b) erstreckende Längsabschnitt des Griffteils (13, 14) schalenförmig geformt ist.

17. Handstück nach einem der Ansprüche 4 bis 16,
**dadurch gekennzeichnet,**
**dass** ein Griffteil (14), insbesondere das lösbare Griffteil (14), das andere Griffteil (13) nach vorne überragt und das Basisteil (11) ringförmig umgibt.

18. Handstück nach einem der vorherigen Ansprüche,
**dadurch gekennzeichnet,**
**dass** das andere Griffteil (13) unlösbar mit dem Basisteil (11) verbunden ist.

19. Handstück nach einem der vorherigen Ansprüche,
**dadurch gekennzeichnet,**
**dass** das Basisteil (11) durch ein vorzugsweise hohlzylindrisches Rohr gebildet ist.

20. Handstück nach einem der vorherigen Ansprüche,
**dadurch gekennzeichnet,**
**dass** zwei oder mehrere lösbare Griffteile (14) vorgesehen sind, die von unterschiedlicher Oberflächenbeschaffenheit sind, insbesondere unterschiedliche Erhebungen (18b) aufweisen.

21. Handstück nach einem der vorherigen Ansprüche 11 bis 20,
**dadurch gekennzeichnet,**
**dass** die wenigstens eine Erhebung (18b) rückseitig eine Stufenfläche (18c) aufweist.

22. Medizinisches längliches Handstück (1) mit einem Basisteil (11) und einem dieses mindestens teilweise umgebenden Griffelement, das lösbar am Basisteil (11) befestigbar ist,
**dadurch gekennzeichnet,**
**dass** wenigstens zwei Griffelemente (12a, 12b) vorgesehen sind, deren Oberflächenbeschaffenheit unterschiedlich ist, und von denen das eine oder das andere Griffteil (12a, 12b) wahlweise an dem Basisteil (11) befestigbar ist.

23. Handstück nach Anspruch 22,
**dadurch gekennzeichnet,**
**dass** eine Befestigungsvorrichtung zum Befestigen des jeweiligen Griffelementes (12a, 12b) ein oder mehrere erste Befestigungselemente (21a, 20, 22) am Basisteil (11) und ein oder mehrere mit dem oder den ersten Befestigungselementen zusammenwirkende zweite Befestigungselemente (20b,21b) an den Griffelementen (12a, 12b) aufweist.

24. Handstück nach Anspruch 23,
**dadurch gekennzeichnet,**
**dass** das Basisteil (11) durch einen Steckzapfen (21a) gebildet ist, der von einem hinteren Handstückabschnitt absteht, und die Griffelemente (12a, 12b) jeweils mit einer Steckausnehmung (21b) hülsenförmig ausgebildet sind sowie mit dem Steckzapfen (21a) zusammensteckbar und gegen ein Drehen und Rückbewegen sicherbar sind.

25. Handstück nach Anspruch 24,
**dadurch gekennzeichnet,**
**dass** zwischen dem Steckzapfen (26) und dem jeweiligen Griffelement (12a, 12b) eine Drehsicherung (20) mit einem Drehsicherungszapfen (20a) an dem einen Teil und einer Drehsicherungsausnehmung (20b) an dem anderen Teil und ein zwischen dem Steckzapfen (21a) und dem Griffelement (12a, 12b) wirksame Rückbewegungssicherung (22) vorgesehen sind, wobei vorzugsweise der Drehsicherungszapfen (20a) vom Steckzapfen (21a) absteht und die Drehsicherungsausnehmung (20b) im zugehörigen Griffelement (12a, 12b) angeordnet ist.

26. Handstück nach Anspruch 24 oder 25,
**dadurch gekennzeichnet,**
**dass** die Rückbewegungssicherung (22) durch ein Schraubteil (23) gebildet ist, das vorzugsweise mit dem vorderen Ende des Steckzapfens (21a) zusammenwirkt.

27. Handstück nach einem der vorherigen Ansprüche 22 bis 26,
**dadurch gekennzeichnet,**
**dass** ein oder beide Griffelemente (12a, 12b) auf ihrem Umfang jeweils eine oder mehrere Erhebungen (18a, 18b) aufweist bzw. aufweisen, die vorzugsweise konvex gerundet ist bzw. sind.

28. Handstück nach Anspruch 27,
**dadurch gekennzeichnet,**
**dass** die wenigstens eine Erhebung (18a, 18b) sich über die gesamte Länge (L) des Griffelements (12a, 12b) oder nur über einen Teil der Länge (L) erstreckt oder dass die wenigstens eine Erhebung (18a, 18b) sich jeweils im vorderen Endbereich oder im Bereich der vorderen Hälfte des Griffelements (12a, 12b) erstreckt.

29. Handstück nach Anspruch 27 oder 28,
**dadurch gekennzeichnet,**
**dass** die Erhebung (18a, 18b) des einen Griffelements (12a) höher ist als die Erhebung des anderen Griffelements (12b) oder das andere Griffelement (12b) ohne Erhebung ausgebildet ist, vorzugsweise hohlzylindrisch ausgebildet ist.

30. Handstück nach einem der vorherigen Ansprüche 22 bis 29,
**dadurch gekennzeichnet,**
**dass** ein oder beide Griffelemente (12a, 12b) einen oder mehrere auf dem Umfang verteilt angeordnete Mantelflächenbereiche (U6) aufweisen, die eine größere Oberflächenreibung aufweisen als die benachbarte Oberfläche des Griffelements (12a, 12b).

31. Handstück nach Anspruch 30,
**dadurch gekennzeichnet,**
**dass** der wenigstens eine Mantelflächenbereich (U6) durch einen in eine Ausnehmung (25) eingesetzten und lösbar oder unlösbar befestigte Materialstreifen (24) gebildet ist, der aus einem Material besteht, das vorzugsweise weicher ist als das Material des Griffelements (12a, 12b) im benachbarten Oberflächenbereich.

32. Handstück nach Anspruch 31,
**dadurch gekennzeichnet,**
**dass** der oder die Mantelflächenbereiche (U6) bezüglich einer Erhebung (18a, 18b) in Umfangsrichtung versetzt sind, vorzugsweise auf beiden Seiten der Erhebung (18a, 18b) angeordnet sind.

33. Handstück nach Anspruch 31 oder 32,
**dadurch gekennzeichnet,**
**dass** der Materialstreifen (24) unlösbar, z.B. durch Kleben, oder lösbar befestigt ist, vorzugsweise durch eine klemmend wirksame Steckzapfenverbindung (26).
